Europäisches Patentamt

European Patent Office

Office européen des brevets

(11) Numéro de publication: **0 406 131 A1**

# DEMANDE DE BREVET EUROPEEN

(21) Numéro de dépôt: 90420288.4

(22) Date de dépôt: 18.06.90

(51) Int. Cl.⁵: **B23K 9/028**

(30) Priorité: 19.06.89 FR 8908734

(43) Date de publication de la demande:
02.01.91 Bulletin 91/01

(84) Etats contractants désignés:
CH DE ES GB IT LI SE

(71) Demandeur: CONCEPTION ET FABRICATION
D'INNOVATIONS MECANIQUES COFIM
Z.I. Les Blanchisseries
F-38500 Voiron(FR)

(72) Inventeur: Caillet, René
37 rue du Belvedère
F-38500 Voiron(FR)
Inventeur: Clerc, Christian

F-38340 St Julien de Ratz(FR)

(74) Mandataire: Bratel, Gérard et al
Cabinet GERMAIN & MAUREAU B.P. 3011011
F-69392 Lyon Cédex 03(FR)

(54) Pince de soudage pour le soudage à l'arc de tubes.

(57) Cette pince est destinée au soudage bout à bout de deux tubes disposés suivant un axe (3), au moyen d'un électrode (14) animée d'un mouvement circulaire (18). Deux couronnes (1,2), montées tournantes autour de l'axe (3), sont entraînées en rotation par l'intermédiaire de pignons (7, 8, 10, 11). Sur une couronne (1) est monté oscillant un organe pendulaire (13) servant de support à l'électrode de soudage (14). Sur l'autre couronne (2) est prévue une came (16) qui coopère avec un élément (15) solidaire de l'organe pendulaire (13). Les deux couronnes (1,2) sont entraînées par des moteurs distincts, auxquels sont associés des moyens de commande et de contrôle permettant de modifier la vitesse de rotation d'au moins l'une des couronnes, de manière à faire varier la distance entre l'électrode (14) et l'aie (3). La hauteur d'arc est ainsi régulée.

EP 0 406 131 A1

La présente invention concerne une pince de soudage, destinée notamment à réaliser le soudage bout à bout de deux tubes disposés suivant le même axe. Cette pince utilise, plus particulièrement, une électrode de soudage du type "T.I.G." (Tungten Inert Gas), animée d'un mouvement circulaire autour dudit axe, et elle peut faire partie d'un banc de soudage fixe ou d'un matériel portatif.

Il existe actuellement des têtes de soudage orbitales, avec régulation d'arc, ainsi que des pinces de soudage. Les pinces de soudage actuelles ne possèdent pas de régulation d'arc. Il en résulte que, dans le cas où les tubes à souder sont de section plus ou moins irrégulière, notamment ovale, la hauteur d'arc varie au cours de la rotation de l'électrode autour des tubes qui s'effectue suivant une trajectoire circulaire.

La présente invention vise à remédier à ces inconvénients, en fournissant une pince de soudage perfectionnée qui, tout en conservant une structure simple, permet d'adapter la position et la trajectoire de l'électrode de soudage, plus particulièrement en vue de réguler la hauteur d'arc, par exemple de manière à maintenir cette hauteur d'arc constante en cas d'ovalisation des tubes à souder.

A cet effet, la pince de soudage objet de l'invention comprend essentiellement, en combinaison : une première couronne et une deuxième couronne montées tournantes autour de l'axe des pièces à souder, des moyens d'entraînement en rotation de la première couronne, des moyens distincts des précédents pour l'entraînement en rotation de la seconde couronne, un organe pendulaire monté oscillant sur la première couronne et servant de support pour l'électrode de soudage, des moyens formant came prévus sur la seconde couronne et coopérant avec un élément solidaire de l'organe pendulaire, et des moyens de commande et de contrôle, associés aux moyens d'entraînement en rotation des deux couronnes, et permettant de modifier la vitesse de rotation d'au moins l'une des couronnes de manière à provoquer, par modification de la position angulaire relative des deux couronnes et action de la came sur l'organe pendulaire, un déplacement radial contrôlé de l'électrode de soudage.

Les moyens de commande et de contrôle sont prévus, par exemple pour entraîner en rotation la première couronne à une vitesse constante, et pour entraîner en rotation la seconde couronne a une vitesse variable, supérieure ou inférieure à celle de la première couronne ; ainsi, on donne à la seconde couronne une avance ou un retard par rapport à la première couronne, ce qui permet de modifier la distance entre l'électrode de soudage et l'axe de la pince, donc de faire décrire à l'électrode une trajectoire circulaire de rayon plus ou moins grand.

Dans une forme de réalisation particulière de cette pince de soudage, l'organe pendulaire monté pivotant sur la première couronne rotative, et servant de support à l'électrode de soudage, est pourvu d'un téton tourné vers la seconde couronne, tandis que cette seconde couronne comporte, en tant que moyens formant came, une rainure de préférence incurvée dans laquelle est montée glissante une extrémité du téton.

Avantageusement, chaque couronne rotative possède une denture extérieure, en prise avec des pignons d'entraînement accouplés à des moteurs respectifs, dont l'un au moins est prévu pour fonctionner à une vitesse variable, sous la dépendance des moyens de commande et de contrôle précités.

Selon un mode d'exécution, chaque couronne rotative présente une encoche lui conférant une forme en "C" et permettant l'amenée et la sortie latérales des pièces à souder, deux pignons d'entraînement synchronisés étant associés à chaque couronne, avec une disposition telle que la denture extérieure de chaque couronne reste toujours en prise avec au moins l'un des deux pignons d'entraînement correspondants.

La pince de soudage objet de l'invention peut encore comporter des détecteurs de vitesse de rotation des couronnes et/ou de hauteur d'arc, reliés aux moyens de commande et de contrôle associés aux moyens d'entraînement en rotation des deux couronnes, de manière notamment à pouvoir détecter toute variation de la hauteur d'arc au cours du mouvement de l'électrode de soudage et à provoquer une correction immédiate de cette hauteur d'arc, la maintenant constante même en cas d'irrégularité de forme des pièces à souder, telle que résultant d'une ovalisation de tubes à souder.

On réalise ainsi une pince à souder avec hauteur d'arc parfaitement régulée par un principe de vitesse différentielle. Bien entendu, dans le cas de tubes de section parfaitement circulaire, les deux couronnes peuvent être aussi entraînées en rotation à vitesse identique, pour faire décrire à l'électrode de soudage une trajectoire rigoureusement circulaire.

De toute façon, l'invention sera mieux comprise à l'aide de la description qui suit, en référence au dessin schématique annexé représentant à titre d'exemple non limitatif, une forme de réalisation de cette pince de soudage :

Figure 1 est une vue de face de la pince de soudage conforme à la présente invention, dans une position particulière ;

Figures 2,3 et 4 sónt des vues similaires à figure 1, illustrant d'autres positions de cette pince de soudage ;

Figure 5 est un schéma synoptique montrant les éléments de commande et de régulation associés à cette pince de soudage.

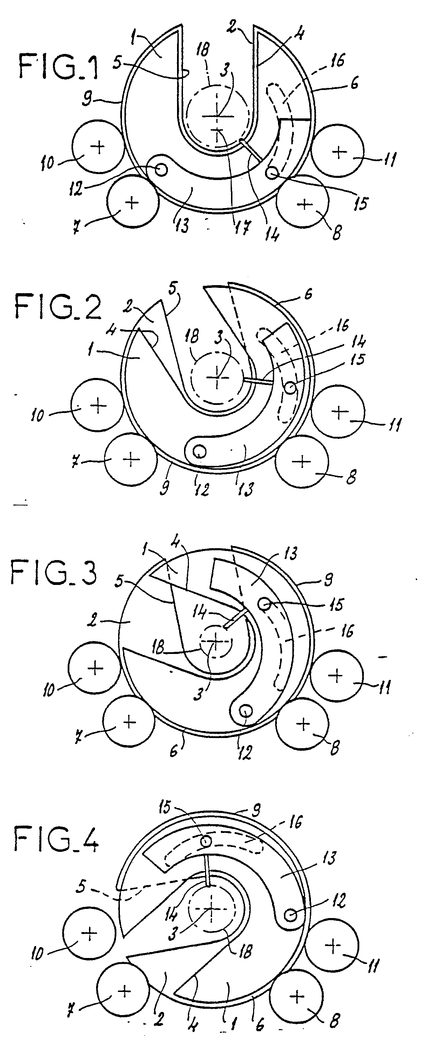

La pince de soudage, représentée au dessin, comprend deux couronnes 1 et 2 montées tournantes autour du même axe central 3, qui correspond à l'axe géométrique des tubes à souder. Chaque couronne l ou 2 présente une large encoche, respectivement 4 ou 5, lui donnant une forme en "C"' et permettant le passage et la sortie latérale des tubes, du moins dans la position relative montrée à la figure 1? où les deux encoches 4 et 5 sont amenées en coïncidence.

La première couronne 1 possède une denture extérieure 6, qui se trouve en prise avec l'un au moins de deux pignons d'entraînement synchronisés 7 et 8, décalés angulairement. De même, la seconde couronne 2 possède une denture extérieure 9, qui se trouve en prise avec l'un au moins de deux autres pignons d'entraînement synchronisés 10 et 11 décalés angulairement. Ces pignons sont eux-mêmes accouplés, par l'intermédiaire d'autres pignons au moyens de transmission, à des moteurs électriques non représentés, avec un premier moteur associé à la première couronne l, et un deuxième moteur associé à la seconde couronne 2. La disposition retenue permet à la denture 6 ou 9 de chaque couronne 1 ou 2 d'être toujours en prise avec au moins l'un des deux pignons d'entraînement correspondants soit 7,8 ou 10,11, malgré l'interruption de ces dentures résultant des encoches 5 et 6. Chaque couronne 1 ou 2 peut ainsi être entraînée en rotation continue autour de l'axe 3, à partir du moteur qui lui est associé.

Sur la première couronne 1 est monté oscillant, autour d'un axe de pivotement 12 parallèle à l'axe central 3, un organe pendulaire 13 de forme incurvée. L'organe pendulaire 13 supporte une électrode de soudage 14, tournée vers l'axe 3. Sur l'organe pendulaire 13 est encore fixé un téton 15 tourné vers la seconde couronne 2. Une extrémité du téton 15 est montée glissante dans une rainure incurvée l 6 creusée dans la seconde couronne 2, la rainure 16 n'étant pas centrée sur l'axe 3 et pouvant être formée suivant un arc de cercle centré en un point 17 situé hors de l'axe 3.

On comprend que, pour une position angulaire relative donnée des deux couronnes 1 et 2, la position du téton 15 dans la rainure 16 est fixée et détermine la distance entre l'électrode de soudage 14 et l'axe central 3. Si les deux couronnes 1 et 2 sont entraînés en rotation simultanément et à la même vitesse, leur position relative reste invariable et l'extrémité de l'électrode de soudage 14 décrit une trajectoire parfaitement circulaire 18 centrée sur l'axe 3.

Plus particulièrement, dans la position relative des deux couronnes et 2 montrée à la figure 1, le téton 15 se situe à une première extrémité de la rainure 16, et l'extrémité de l'électrode 14 décrit alors une trajectoire 18 de rayon maximal.

D'autres positions sont illustrées par les figures 2 à 4. Dans le cas de la figure 2, le téton 15 occupe une certaine position intermédiaire dans la rainure 16, telle que l'extrémité de l'électrode 14 décrit une trajectoire 18 de rayon intermédiaire, mais relativement grand. Dans le cas de la figure 3, le téton 15 se situe à la deuxième extrémité de la rainure 16, et l'extrémité de l'électrode 14 décrit une trajectoire 18 de rayon minimal. La figure 4 indique une autre position intermédiaire pour laquelle l'extrémité de l'électrode 14 décrit une trajectoire de rayon intermédiaire, mais relativement petit. Il va de soi qu'il existe encore une infinité d'autres positions intermédiaires, donc une possibilité de variation continue du rayon de la trajectoire 1 5, entre les valeurs maximale et minimal définies ci-dessus.

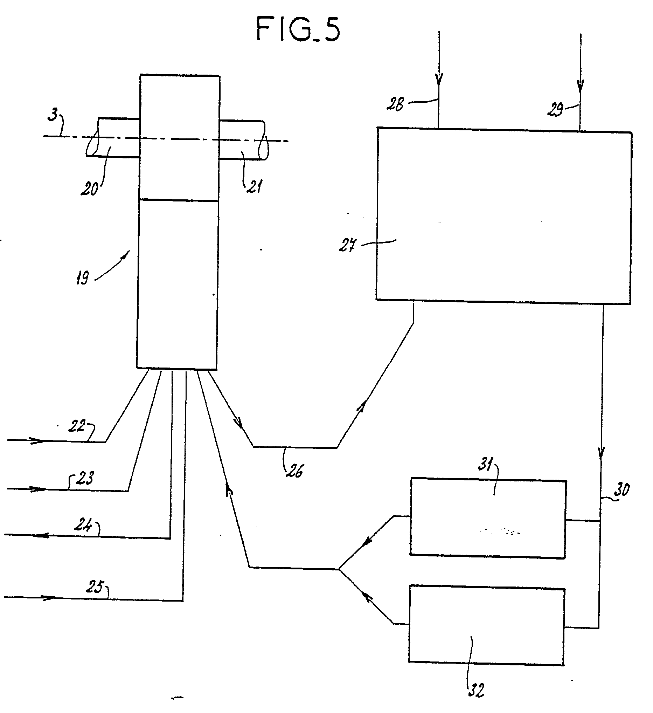

Il découle de ce qui précède, qu'en faisant varier la vitesse de rotation de l'une au moins (les couronnes 1 et 2, on peut modifier à tout moment la distance entre l'extrémité de l'électrode de soudage 14 et l'axe central 3. La figure 5 montre, à titre d'exemple et très schématiquement, un ensemble de commande et de contrôle accompagnant la pince de soudage 19 proprement dite, et permettant de réguler la distance entre l'extrémité de l'électrode et l'axe 3 suivant lequel sont disposés les deux tubes 20 et 21 à souder l'un à l'autre, notamment pour conserver une hauteur d'arc constante.

La pince de soudage 19, qui peut être du type "TIG" (Tungsten Inert Gas), comporte une connexion à une polarité de soudage 22, une arrivée d'eau et d'électricité 23, un départ d'eau de retour 24 et une arrivée de gaz 25. Des détecteurs de vitesse et de hauteur d'arc fournissent des signaux représentatifs, qu'une liaison 26 transmet vers une unité électronique 27 de gestion et de contrôle des vitesses, qui reçoit aussi en 28 et 29 respectivement un signal de référence de vitesse de rotation et un signal de référence de hauteur d'arc. La sortie 30 de l'unité électronique 27 est en liaison avec une commande 31 pour le moteur électrique d'entraînement de la première couronne 1, et avec une autre commande 32 pour le moteur électrique d'entraînement de la seconde couronne 2.

Le principe retenu pour la régulation peut consister à maintenir constante la vitesse de la première couronne 1, et à faire varier la vitesse de la seconde couronne 2 en "plus" ou en "moins" par rapport à la vitesse de la première couronne 1, de manière à obtenir selon le cas une avance ou un retard de la seconde couronne par rapport à la première (l'inverse étant évidemment possible).

Si la vitesse de soudage est augmentée ou diminuée et que l'unité électronique 27 associée aux détecteurs décèle une hauteur d'arc différente de celle programmée comme valeur de référence, la régulation intervient pour combler l'écart (positif ou négatif) de hauteur d'arc. Ainsi, la hauteur d'arc est corrigée par variation de vitesse.

Si la vitesse de soudage est constante et qu'une différence de hauteur d'arc est observée par les détecteurs et l'unité électronique 27, ce qui est notamment le cas lorsque les tubes 20 et 21 sont ovalisés, un ordre est donné sur la sortie 30 pour accélérer ou ralentir la couronne 2 par rapport à la couronne 1, de manière à corriger immédiatement la variation de hauteur d'arc observée.

Bien entendu, l'invention ne se limite pas à la seule forme de réalisation ce cette pince de soudage qui a été décrite ci-dessus, à titre d'exemple ; lie en embrasse, au contraire, toutes les variantes respectant le même principe ; ainsi l'on ne s'éloignerait pas du cadre de l'invention en remplaçant les deux couronnes en forme de "C" par des couronnes en forme d'anneaux complets, dans le cas d'une pince de soudage prévue pour une introduction et une sortie axiale, et non pas latérale, des tubes ou autres pièces à souder.

**Revendications**

1. Pince de soudage, destinée notamment à réaliser le soudage bout à bout de deux tubes (20,21) disposés suivant le même axe (3) et utilisant une électrode de soudage (14) animée d'un mouvement circulaire (1 8) autour dudit axe (3), caractérisé en ce qu 'elle comprend essentiellement, en combinaison une première couronne (1) et une deuxième couronne (2) montées tournantes autour de l'axe (3) des pièces à souder, des moyens d'entraînement en rotation (6,7,8) de la première couronne (1), des moyens (9,10,11) distincts des précédents pour l'entraînement en rotation de la seconde couronne (2), un organe pendulaire (13) monté oscillant (en 12) sur la première couronne (1) et servant de support pour l 'électrode de soudage (14), des moyens formant came (16) prévus sur la seconde couronne (2) et coopérant avec un élément (15) solidaire de l'organe pendulaire (13), et des moyens de commande et de contrôle (26 à 32) associés aux moyens d'entraînement en rotation (6 à 11) des deux couronnes (1,2), et permettant de modifier la vitesse de rotation d'au moins l'une des couronnes (1,2) de manière à provoquer, par modification de la position angulaire relative des deux couronnes (1,2) et action de la came (16) sur l'organe pendulaire (13), un déplacement radial contrôlé de l'électrode de soudage (14).

2. Pince de soudage selon la revendication 1, caractérisé"e en ce que les moyens de commande et de contrôle (26 à 32) sont prévus pour entraîner en rotation la première couronne (1) à une vitesse con tante, et pour entraîner en rotation la seconde couronne (2) à une vitesse variable, supérieure ou inférieure à celle de la première couronne (1).

3. Pince de soudage selon la revendication 1 ou 2, caractérisée en ce que l'organe pendulaire (13) monté pivotant sur la première couronne rotative (1), et servant de support à l'électrode de soudage (14), est pourvu d'un téton (15) tourné vers la seconde couronne (2), tandis que cette seconde couronne (2) comporte, en tant que moyens formant came, une rainure (16) de préférence incurvée dans laquelle est montée glissante une extrémité du téton (15).

4. Pince de soudage selon l'une quelconque des revendications I à 3, caractérisée en ce que chaque couronne rotative (1,2) possède une denture extérieure (6,9), en prise avec des pignons d'entraînement (7, 8, 10, 11) accouplés à des moteurs respectifs, dont l'un au moins est prévu pour fonctionner à une vitesse variable, sous la dépendance des moyens de commande et de contrôle précités (26 à 32).

5. Pince de soudage selon la revendication 4, caractérisée en ce que chaque couronne rotative (1,2) présente une encoche (4,5) lui conférant une forme en "C" et permettant l'amenée et la sortie latérales des pièces à souder (20,21), deux pignons d'entraînement synchronisés (7, 8, 10, 11) étant associés à chaque couronne (1,2), avec une disposition telle que la denture extérieure (6,9) de chaque couronne reste toujours en prise avec au moins l'un des deux pignons d'entraînement correspondants (7, 8, 10, 11).

6. Pince de soudage selon l'une quelconque des revendications 1 à 5, caractérisée en ce qu'elle comporte des détecteurs de vitesse de rotation des couronnes (1,2) et/ou de hauteur d'arc,; reliés aux moyens de commande et de contrôle (26 à 32) associés aux moyens d'entraînement en rotation (6 à 11) des deux couronnes (1,2), de manière notamment à pouvoir détecter toute variation de la hauteur d'arc au cours du mouvement de 1 'électrode de soudage (14) et à provoquer une correction immédiate de cette hauteur d'arc, la maintenant constante même en cas d'irrégularité de forme des pièces à souder, telle que résultant d'une ovalisation des tubes à souder (20, 21).

FIG.1

FIG.2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-3688069 (KAZLAUSKAS)<br>* colonne 1, ligne 38 - colonne 7, ligne 59; figures 1-4, 8-16 *<br>----- | 1 | B23K9/028 |

| DOMAINES TECHNIQUES RECHERCHES (Int. Cl.5 ) |
|---|
| B23K |

Le présent rapport a été établi pour toutes les revendications

| Lieu de la recherche | Date d'achèvement de la recherche | Examinateur |
|---|---|---|
| LA HAYE | 20 SEPTEMBRE 1990 | HERBRETEAU D. |